# EUROPÄISCHE PATENTSCHRIFT

(11) **EP 1 038 575 B1**
(45) Veröffentlichungstag und Bekanntmachung des Hinweises auf die Patenterteilung: **08.06.2005**
(21) Anmeldenummer: 00102512.1
(22) Anmeldetag: 05.02.2000
(51) Int. Cl.: B01J 19/24, B01J 8/02, B01J 8/00, C01B 3/58

(54) **Plattenreaktor**
Plate-type reactor
Réacteur à plaques

(30) Priorität: 19.03.1999 DE 19912318
(43) Veröffentlichungstag der Anmeldung: 27.09.2000
(73) Patentinhaber: Ballard Power Systems AG, 73230 Kirchheim / Teck-Nabern (DE)
(72) Erfinder: Birk, Wolfram, 73235 Weilheim (DE); Brauchle, Stefan, 88400 Biberach/Riss (DE); Wolfsteiner, Matthias, 91793 Alesheim (DE)
(74) Vertreter: Beyer, Andreas, Dr.

(56) Entgegenhaltungen:
- EP-A- 0 911 598
- DE-A- 4 422 178
- DE-A- 19 746 074
- DE-C- 19 512 219
- US-A- 5 776 421

## Beschreibung

Die Erfindung betrifft einen Plattenreaktor gemäß dem Oberbegriff des Patentanspruchs 1.

Aus der AT 321 952 ist ein katalytischer Reaktor bekannt, bei dem zur Erzielung einer gleichmäßigen Gasverteilung in dem Reaktorbett des Reaktors ein kegel- oder konusförmiger Verdrängungskörper als Einbau im Gaseinlasskanal vorgesehen ist.

Um die Gleichverteilungsprobleme gasförmiger und/oder flüssiger Mengenströme auf die parallelgeschalteten Räume eines Plattenreaktors zu verbessern, ist es bekannt, ein optimales Verhältnis von Verteilerkanaldurchmesser zu Sammelkanaldurchmesser einzustellen. Bei der Verwendung von Plattenreaktoren sind jedoch hinsichtlich der Verteilung gasförmiger oder flüssiger Mengenströme hohe Anforderungen gestellt. Dies gilt vor allem für direkt beheizte Komponenten, bei denen in jedem Gas- und Reaktionsraum ausgewogene Energie- und Stoffumsetzungsbedingungen gewährleistet sein müssen. Diese hohen Anforderungen können nur durch zusätzliche Maßnahmen zur Gewährleistung einer Gleichverteilung erreicht werden. Ein Plattenreaktor dieses Typs ist z.B. in der Druckschrift DE 197 53 720 beschrieben. Durch zusätzliche Maßnahmen wird jedoch der Plattenreaktor aufwendiger und teurer.

Die DE 44 22 178 A1 offenbart eine Vorrichtung zur Verteilung eines zweiphasigen Kältemittelmassenstroms in einem als Verdampfer betriebenen Plattenwärmetauscher, der eine Mehrzahl von durch Platten voneinander getrennten Austauscherkanälen umfasst. Die Austauscherkanäle sind einlassseitig mit einem Verteilerkanal und auslassseitig mit einem Sammelkanal verbunden. Um eine weitgehend gleichmäßige Aufteilung des Kältemittelmassenstroms auf die einzelnen Austauscherkanäle zu gewährleisten, ist im Verteilerkanal des Plattenwärmetauschers ein hohlzylindrischer, mit Drosselöffnungen versehener Drosseleinsatz angeordnet. Im Inneren des Drosseleinsatzes befindet sich ein beispielsweise aus einem porösen Sintermetall bestehender Porenkörper, der in Form eines sich in Strömungsrichtung verjüngenden Hohlkegels ausgebildet ist.

Der Erfindung liegt die Aufgabe zugrunde, einen für den Einsatz in einem Brennstoffzellensystem geeigneten Plattenreaktor mit einer möglichst gleichmäßigen Mengenstromverteilung zu schaffen, der eine Verbesserung des Kaltstartverhaltens des Brennstoffzellensystems ermöglicht.

Diese Aufgabe wird durch einen Plattenreaktor mit den Merkmalen des Anspruchs 1 gelöst.

Erfindungsgemäß wird im Strömungsweg eines Mediums in einen Verteilerkanal und/oder Sammelkanal ein Einlegekörper eingelegt, um die Massenstromverteilung in Reaktions- und/oder Kühlkanälen des Reaktors zu homogenisieren. Der Einlegekörper weist in Strömungsrichtung eine veränderliche Durchlässigkeit für das Medium auf.

Die Mengenstromverteilung des Mediums entlang des Verteiler und/oder Sammelkanals kann so gezielt beeinflusst werden. Der Einlegekörper weist katalytisch aktives Material auf.

Weitere Ausgestaltungen und Verbesserungen sind der Beschreibung und den weiteren Ansprüchen zu entnehmen. Es zeigen
Fig. 1 eine besonders bevorzugte Anordnung eines mehrlagigen Einlegekörpers (Fig. 1a), eines einlagigen Einlegekörpers (Fig. 1b) und die Mengenstromverteilung in einem Reaktor mit einem erfindungsgemäßen Einlegekörper (Fig. 1c),
Fig. 2 einen schematischen Querschnitt durch eine Stufe eines bevorzugten Plattenreaktors,
Fig. 3 ein bevorzugtes Ausführungsbeispiel eines Einlegekörpers im Verteilerkanal,
Fig. 4 eine Anordnung mit einem bevorzugten Einlegekörper,
Fig. 5 eine Anordnung mit einem weiteren bevorzugten Einlegeteil im Verteilerkanal mit symmetrischer (Fig. 5a) und asymmetrischer (Fig. 5b) Ausgestaltung und
Fig. 6 eine vorteilhafte Lanze zum Zudosieren von Reaktionsmedien.

Die Erfindung ist anhand eines Plattenreaktors beschrieben, bei dem Kühlkanäle und Reaktionskanäle alternierend angeordnet sind. Die Medienzufuhr erfolgt vorzugsweise über einen Verteilerkanal, die Medienabfuhr über einen Sammelkanal. Es ist jedoch möglich, die Erfindung auch bei anderen Arten von Plattenreaktoren anzuwenden, ebenso kann sie bei mehrstufigen Plattenreaktoren eingesetzt werden.

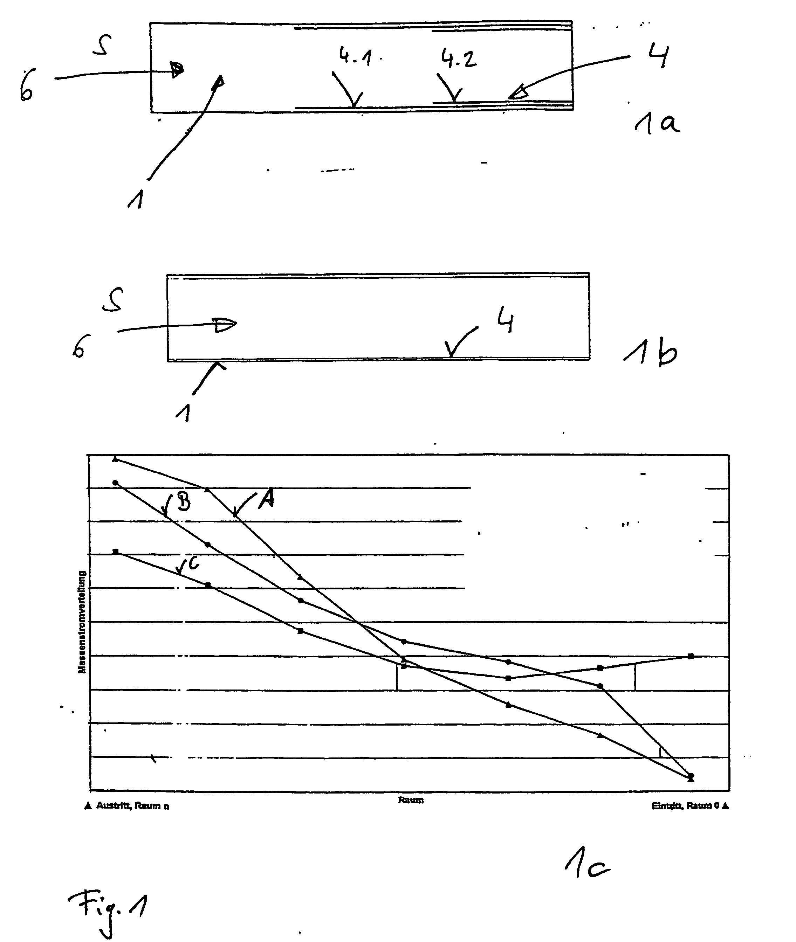

In Fig. 1 ist eine besonders bevorzugte Ausgestaltung eines Einlegekörpers in einem medienführenden Kanal 1 eines Reaktors dargestellt. Der Kanal 1 kann ein Verteilerkanal oder ein Sammelkanal sein. Es wird ein bevorzugter sogenannter Z-Strömer betrachtet. Der erfindungsgemäße Gedanke gilt jedoch auch entsprechend für andere Strömungsanordnungen, etwa U-Strömer.

Der Einlegekörper stellt ein Mittel dar, um die Strömungsverteilung des Mediums insbesondere in den Reaktions- und/oder Kühlkanälen des Reaktors zu homogenisieren. Die in den Fig. 1a, 1b dargestellten Einlegekörper 4 sind dünne, im wesentlichen am Umfang des Kanals 1, z.B. eines Verteilerkanals 2 und/oder Sammelkanals 3, anliegende poröse Bauteile, insbesondere Metallvliese, Lochbleche, Netze oder Keramikteile. Die Einlegekörper 4 sind so dünn, dass sie den Querschnitt des jeweiligen Kanals 1 praktisch nicht verengen. Der Einlegekörper 4 ist im Strömungsweg des Mediums 6 angeordnet. Ein Medium 6 mit einer Strömungsrichtung S im Kanal 1 strömt durch den Einlegekörper 4, wenn es aus dem Verteilerkanal 2 in die entsprechenden Reaktionsräume oder Kühlräume eintritt, bzw. wenn es von dort in den Sammelkanal 3 eintritt.

Obwohl der Querschnitt des Kanals 1 durch den Einlegekörper 4 praktisch nicht verändert wird, kann trotzdem eine deutliche Verbesserung der Gleichverteilung des Mediums 6 erreicht werden. Die Wirkung beruht hier nicht auf einer Querschnittsverengung des Kanals 1, sondern auf einer Erhöhung des Druckverlusts des Mediums 6 beim Verlassen des Verteilerkanals 2 bzw. beim Eintritt in den Sammelkanal 3.

Der Einlegekörper 4 zeigt einen längs des Kanals 2, 3 veränderlichen Widerstandsbeiwert ξ. Der Widerstandsbeiwert ist gegeben durch ξ= (2^{·Δ}pᵥ) / (^{ρ·}w²), wobei ^{Δ}pᵥ der Druckverlust, ρ die Dichte des strömenden Mediums und w die Mediengeschwindigkeit ist.

In der Ausführung gemäß Fig. 1a wird entlang der Lauflänge L des Verteilerkanals 2 in Strömungsrichtung S in bestimmten Abständen jeweils eine zusätzliche Lage 4.1, 4.2 des Einlegekörpers 4 mit jeweils geringerem Durchmesser als die vorangehende Lage eingeführt. Die Durchlässigkeit des Einlegekörpers nimmt in Strömungsrichtung ab, d.h. der Widerstandsbeiwert ξ nimmt zu.

Im ersten Drittel des Verteilerkanals 2, in Strömungsrichtung S gesehen, ist kein Einlegekörper vorgesehen. Nach etwa einem Drittel der Lauflänge L des Kanals 1 ist eine erste Lage 4.1 des Einlegekörpers 4 angeordnet, nach etwa zwei Dritteln der Lauflänge L des Kanals 1 ist eine weitere Lage 4.2 des Einlegekörpers 4 angeordnet. Die zweite Lage 4.2 hat einen kleineren Durchmesser als die erste Lage 4.1. Entlang der Lauflänge L verringert sich damit segmentweise die Durchlässigkeit des Einlegekörpers 4 für das Medium 6, d.h. der Widerstandsbeiwert ξ erhöht sich. Für einen Sammelkanal 3 in einem bevorzugten Z-Strömer ist die Anordnung zweckmäßigerweise so ausgestaltet, daß die Durchlässigkeit des Einlegekörpers 4 auch entlang des Sammelkanals 3 in Strömungsrichtung S des Mediums 6 abnimmt. Ohne Einlegekörper 4 würde der Massenstrom durch die Kanäle im rechten Bereich der Figur höher sein als im linken Bereich. Die Massenstromverteilung ist mit dem Einlegekörper dagegen homogener.

Während bei einem Z-Strömer das Medium 6 in Verteiler- und Sammelkanal 2, 3 gleichsinnig strömt, strömt bei einem U-Strömer das Medium 6 in Verteiler- und Sammelkanal gegensinnig. Dabei kann je nach Ausgestaltung der Massenstrom in Strömungsrichtung zunehmen oder abnehmen. Ein Einlegekörper ist gemäß der Erfindung demnach so zu gestalten, dass in dem Bereich des Verteilerund/oder Sammelkanals, in dem ohne Einlegekörper ein höherer Mengenstrom als benachbart dazu herrschen würde, der Einlegekörper eine geringere Durchlässigkeit aufweisen sollte als in jenen benachbarten Bereichen.

In einer bevorzugten Ausführung sind die einzelnen Lagen 4.1, 4.2 jeweils im wesentlichen gleichartig, insbesondere mit gleicher Durchlässigkeit ausgebildet; jedoch können die einzelnen Lagen 4.1, 4.2 auch in der Dicke und/oder Durchlässigkeit oder auch im Material unterschiedlich sein. Der Einlegekörper 4 kann auch mehr als zwei Einzellagen aufweisen. Die Abstufung der verschiedenen Einzellagen 4.1, 4.2, ... des Einlegekörpers 4 kann je nach Bedarf grob oder fein sein, so dass sich die Durchlässigkeit des Einlegekörpers 4 entlang der Lauflänge des Kanals 1 quasikontinuierlich verändert oder aber segmentweise konstant ist und sich von Segment zu Segment der Lauflänge L des Kanals 1 ändert.

In Fig. 1b ist eine weitere bevorzugte Weiterbildung dargestellt, bei der der Einlegekörper 4 nur aus einer Einzellage besteht, die aber entlang der Lauflänge L des Kanals 1 eine veränderliche Durchlässigkeit aufweist. Vorzugsweise wird ein Einlegekörper 4 verwendet, dessen Porosität entlang seiner Längserstreckung variiert. Bei einem Z-Strömer würde die Durchlässigkeit des Einlegekörpers 4 wiederum in Strömungsrichtung abnehmen, während sie bei einem U-Strömer zunehmen oder abnehmen könnte.

Bei einem Plattenreaktor, bei dem ohne Einlegekörper etwa in der Mitte des Verteiler- und/oder Sammelkanals 2, 3 ein höherer Massenstrom als vor oder hinter der Kanalmitte herrschen würde, ist ein Einlegekörper vorzugsweise so auszugestalten, dass dieser in Strömungsrichtung erst eine zur Mitte des Verteiler- und/oder Sammelkanals 2, 3 abnehmende Durchlässigkeit und nach der Mitte dann wieder eine zunehmende Durchlässigkeit aufweist.

In Fig. 1c sind Meßwerte einer Mengenstromverteilung in einem Plattenwärmetauscher dargestellt. Der Plattenwärmetauscher ist als Z-Strömer ausgebildet, d.h. die Strömungsrichtung entlang der Lauflänge L in Verteilerkanal 2 und Sammelkanal 3 ist gleichsinnig. Auf der x-Achse sind die Räume des Mediums, z.B. Reaktionsräume, im Plattenwärmetauscher aufgetragen, wobei die Strömung im Verteilerkanal von rechts nach links verläuft. Auf der y-Achse sind die zugehörigen gemessenen Medientemperaturen, die im wesentlichen zu den Massenströmen in Reaktionsräumen bzw. Kühlräumen proportional sind, aufgetragen.

Kurve A gibt die Werte wieder, wenn keine Einlegekörper 4 in Verteiler- und/oder Sammelkanal 2, 3 vorgesehen sind. Die Mengenstromverteilung variiert in dem speziellen Platten-Wärmetauscher um mehr als eine Größenordnung.

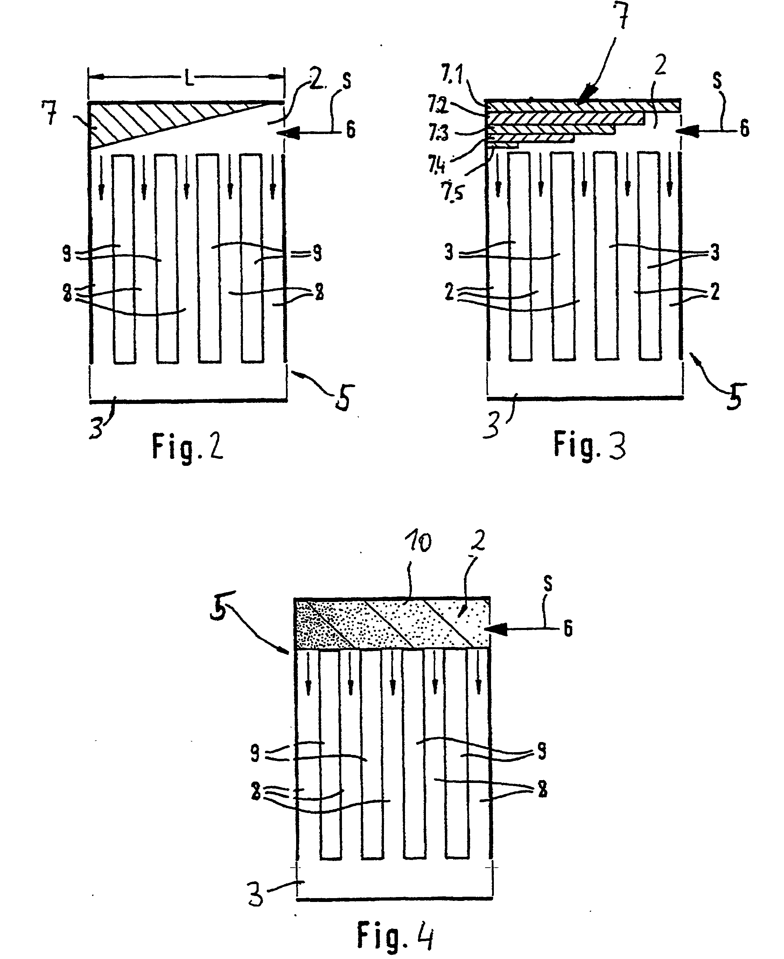

Mit einem konusförmigen Einlegekörper 7 gemäß Fig. 2 in einem medienführenden Verteiler- und/oder Sammelkanal eines Plattenreaktors ist die Mengenstromverteilung dagegen bereits etwas verbessert. Dies zeigt Kurve B. Es wurde jedoch noch keine Optimierung des Einlegekörpers 7 als Funktion der Kanalgeometrie und der Strömungsverhältnisse durchgeführt, so daß noch weitere Verbesserungen möglich sind.

Mit einem Einlegekörper 4 mit variabler Durchlässigkeit zeigt sich jedoch bereits eine deutliche Verbesserung. Dies wird durch Kurve C ersichtlich. Die Mengenstromverteilung variiert entlang der Lauflänge L des Kanals nur noch um etwa einen Faktor 2. Auch hier läßt sich noch eine weitere Verbesserung erzielen, da keine Optimierung der Geometrie der Anordnung vorgenommen wurde.

Die Fig. 2 zeigt schematisch eine Ausführungsform eines bevorzugten Plattenreaktors 5 mit einem Einlegekörper 7 in einem Verteilerkanal 2, welcher den zugeführten Mengenstrom eines Mediums 6 in einzelne Reaktionsräume 8 verteilt und der zusätzlich zu einem Einlegekörper gemäß Fig. 1 vorgesehen ist.

Der Einlegekörper 7 kann aus einem einzigen Körper gebildet sein oder auch aus mehreren Einzelteilen, die zusammen den Einlegekörper 7 bilden. Der Übersichtlichkeit wegen ist der Einlegekörper 4 gemäß Fig. 1 nicht dargestellt. Dies gilt auch für die folgenden Ausführungsbeispiele. Auch sind die Überlegungen für Z-Strömer für U-Strömer bzw. andere Ausgestaltungen für Verteiler- und Sammelkanäle entsprechend anzupassen.

Der Plattenreaktor 5 weist dabei eine Mehrzahl von parallel zueinander angeordneten Reaktionskanälen 8 auf, welche durch parallele Kühlkanäle 9 voneinander getrennt sind. Die Medienzufuhr in die Reaktionskanäle 8 erfolgt über einen Verteilerkanal 2 in einer Strömungsrichtung S. Die Strömungsrichtung des Mediums 6 in den Reaktionskanälen 8 verläuft vorzugsweise senkrecht zu der in den Kühlkanälen 9. Die Summe der Reaktionskanäle 8 und die Summe der Kühlkanäle 9 bilden jeweils den Reaktionsraum 8 bzw. den Kühlraum 9 des Reaktors 5.

Die Erfindung ist anhand einer Ausgestaltung des Verteilerkanals 2 für einen Reaktionsraum 8 erläutert, sie kann aber auch entsprechend angepaßt im Sammelkanal 3 der Reaktionskanäle 8 angeordnet sein und/oder eine entsprechende erfindungsgemäße Maßnahme kann für etwaige Verteiler- und Sammelkanäle 2, 3 des Kühlraums 9 vorgesehen sein.

Im Verteilerkanal 2 ist eine konstruktive Anpassung des vom Reaktionsmedium 6 durchströmten Querschnitts vor und nach jedem Reaktionsraum 8 vorgesehen, so daß sich gleichmäßige Strömungsgeschwindigkeiten im Kanal 2 ergeben und daraus resultierend möglichst konstante statische Drücke über die Lauflänge L des Verteilerkanals 2 einstellen. Vorzugsweise wird die durchströmbare Querschnittsfläche in Strömungsrichtung S verkleinert. Wird ein Sammelkanal 3 betrachtet, so ist bevorzugt die durchströmbare Querschnittsfläche in Strömungsrichtung S vergrößert.

Bevorzugt ist eine Ausführung mit einer linearen Verkleinerung der durchströmten Querschnittsfläche des Verteilerkanals 2 über der Kanallauflänge L. Daraus resultiert ein einheitlicher statischer Druck entlang der Länge L des Kanals 2, der für eine Gleichverteilung des Mengenstroms in die einzelnen Reaktionskanäle 8 sorgt. Der lichte, durchströmbare Querschnitt des Kanals 2 wird entlang der Kanallänge L kontinuierlich verändert.

Günstig ist, die durchströmbare Querschnittsfläche durch Einfügen eines Einlegekörpers 7 in den Verteilerkanal 2 zu verändern. Der Einlegekörper 7 kann massiv ausgeführt sein, er kann jedoch auch für das Reaktionsmedium 6 partiell durchlässig sein, insbesondere aus einem porösen Material oder einem Gewebe bestehen. Der lichte Querschnitt des Kanals 2 wird durch die nichtdurchlässigen Anteile des porösen Materials bzw. des Gewebes verkleinert. Im Falle eines durchlässigen Einlegekörpers 7 kann dieser auch so angeordnet werden, daß das Medium 6 beim Verlassen des Verteilerkanals 2 und/oder beim Eintritt in den Sammelkanal 3 durch den Einlegekörper 7 strömen kann.

Zweckmäßigerweise ist die Länge des Einlegekörpers 7 in etwa gleich der Länge L des Verteilerkanals 2. Er ist bevorzugt kegelförmig oder konusförmig ausgebildet. Diese Maßnahme erfordert nur einen sehr geringen konstruktiven Aufwand. Ein besonderer Vorteil ist, daß bereits bestehende Reaktoren auf einfache Weise aus- oder nachgerüstet werden können, indem ein solches Einlegeteil 7 eingebaut wird.

Durch die Querschnittsveränderung wird die Druckverteilung im Kanal 2 verändert, womit auch der Massenstrom im Kanal 2 beeinflußt wird. Dies kann auch in Reaktoren eingesetzt werden, in denen katalytische Reaktionen ablaufen. Der Vorteil ist, daß die erfindungsgernäße Maßnahme eine gezielte Temperaturverteilung durch die entsprechende Verteilung der Massenströme durch etwaige katalytisch aktive Bereiche in den Reaktionsräumen 8 erlaubt. Insbesondere wird z.B. eine gleichmäßige Temperaturverteilung in den verschiedenen Reaktorräumen ermöglicht. Bei einer Anwendung in direkt beheizten Reformern, die z.B. bei Brennstoffzellensystemen zum Einsatz kommen, wird so eine zu starke und schädliche thermische Beanspruchung des Katalysators vermieden, ebenso wie sogen. Bypass-Effekte durch zu niedrige Temperaturen in einzelnen Reaktorräumen.

Eine entsprechende erfindungsgemäße Ausgestaltung kann auch in einem Sammelkanal 3 ausgeführt werden, in dem das Reaktionsmedium 6 aus den Reaktionsräumen 8 gesammelt und aus dem Gasraum abgeführt wird. Die Maßnahme kann ebenso im Kühlraum angewendet werden, dessen Kühlkanäle 9 alternierend mit den Reaktionskanälen 8 abwechseln. Ebenso ist es möglich, die einzelne oder alle dieser Maßnahmen miteinander zu kombinieren. Insbesondere kann der Plattenreaktor 5 auch mehrstufig aufgebaut sein, wobei mehrere Gasräume in an sich bekannter Weise hintereinandergeschaltet sind.

Eine vorteilhafte Weiterbildung des erfindungsgemäßen Plattenreaktors 5 wird in einem mehrstufigen Plattenreaktor durch eine Kombination des Einlegeteils 7 mit in den Plattenreaktor 5 integrierten Dosiervorrichtungen für Reaktionsmedien 6 erzielt.

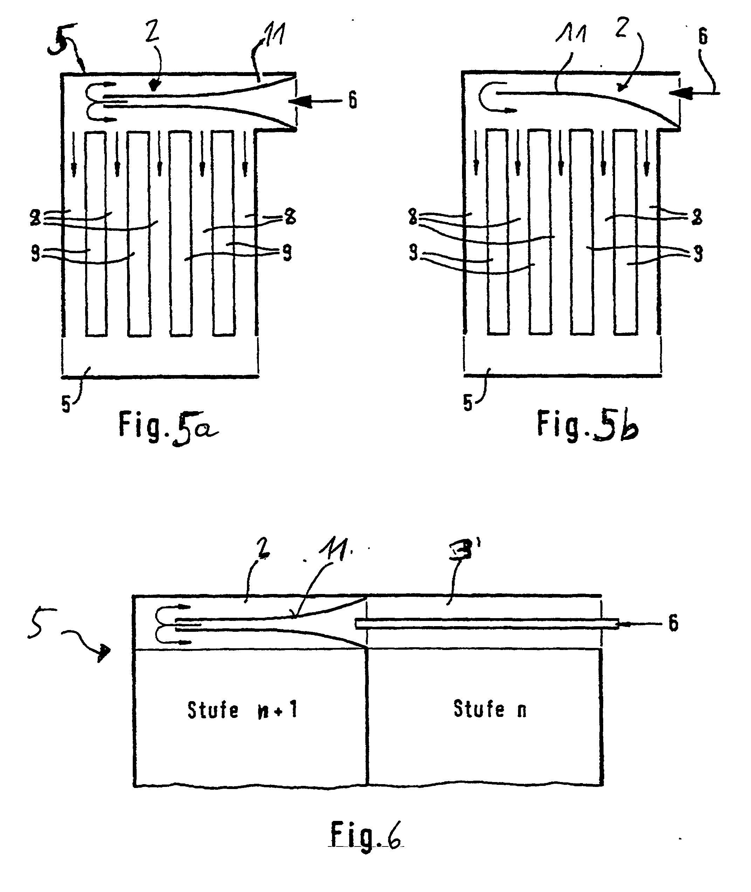

Werden mehrere Gasräume gemäß Fig. 2 hintereinander geschaltet, entsteht ein mehrstufiger Plattenreaktor 5. Durch ein zusätzliches Zudosieren von Reaktionsmedien 6 in die zweite und/oder dritte und/oder weitere Reaktorstufe gelingt es, die Reaktionsbedingungen über die gesamte Reaktoranordnung im wesentlichen gleichmäßig zu gestalten. Besonders vorteilhaft ist, eine Lanze, wie z.B. in Fig. 5 dargestellt, zur Zudosierung von Medien in weiteren Reaktorräumen mit dem Einlegekörper 7 in einem einzigen Bauteil zu integrieren. Derartige Dosiervorrichtungen sind z.B. in der DE 197 53 720 beschrieben, wo einen Plattenreaktor offenbart ist, der z.B. zur Oxidation von Kohlenmonoxid in Reformern für Brennstoffzellensysteme eingesetzt werden kann. Eine solche Dosierlanze kann hier auch mit einem Einlegekörper 4 gemäß Fig. 1 alleine oder in Kombination mit einem der anderen Einlegekörper 7, 10, 11 kombiniert werden.

In Fig. 3 ist eine weitere vorteilhafte Ausgestaltung des Verteilerkanals 2 mit einem Einlegeteil 7 angegeben. Im Verteilerkanal 2 ist ein Einlegeteil 7 angeordnet, welches aus mehreren Einzellagen 7.1, 7.2, 7.3, 7.4, 7.5 besteht, die in Strömungsrichtung versetzt aufeinander angeordnet sind, so daß die Dicke des Einlegekörpers 7 in Strömungsrichtung zunimmt. Dadurch nimmt wiederum der durchströmte Querschnitt in Strömungsrichtung ab. Der Einlegekörper 7 kann massiv ausgeführt sein, es kann jedoch auch aus Gewebe bestehen. Das Einlegeteil 7 kann sowohl rechteckig als auch zylinderförmig oder auch kegel- oder konusförmig wie in Fig. 2 ausgebildet sein.

In Fig. 4 ist eine weitere vorteilhafte Ausgestaltung des Verteilerkanals 2 mit einem Einlegekörper 10 angegeben. Der Einlegekörper 10 besteht aus einem porösen Material oder einem Gewebe, dessen Dichte in Strömungsrichtung entlang der Lauflänge L des Kanals 2 zunimmt. Es kann jedoch auch eine Anordnung ausgewählt werden, bei der die Dichte in Strömungsrichtung abnimmt. Ein solcher Einlegekörper 10 kann wie bei den anderen Ausführungsbeispielen auch im Sammelkanal 3 eingesetzt werden.

Ein vorteilhaftes Einlegeteil 10 ist ein Hohlkörper, insbesondere ein Filter.

Der Einlegekörper 10 kann auch z.B. aus mehreren übereinandergelegten zylinderförmigen Stopfen gebildet werden, deren Dichte sich graduell von einem zum anderen Stopfen ändert. Eine weitere Möglichkeit besteht darin, einen Kegel aus porösem Material zu bilden, bei dem Kegelstümpfe mit unterschiedlicher oder auch gleicher Dichte zusammengefügt werden.

Ein Detail einer weiteren vorteilhaften Ausgestaltung ist in Fig. 5 dargestellt, bei der mehrere Gasräume eines mehrstufigen Plattenreaktors 5, wie in Fig. 2 dargestellt, hintereinander geschaltet sind und bei dem ein zusätzliches Zudosieren von Reaktionsmedien 6 in die zweite und/oder dritte und/oder weitere Reaktorstufe erfolgt. Ein vorteilhaft ausgebildeter Einlegekörper 11 ist als Lanze zur Zudosierung von Medien in weitere Reaktorräume des mehrstufigen Reaktors ausgebildet, von der ein in einen Sammelkanal einer Stufe n+1 des Reaktors hineinragendes Ende mit sich in Strömungsrichtung verjüngenden Querschnitt dargestellt ist.

Ein Reaktionsmedium 6, etwa ein Mediengemisch, tritt durch das am Beginn des Verteilerkanals 2 liegende Ende des Einlegekörpers 11, welches einen großen durchströmbaren Querschnitt aufweist, in den Verteilerkanal 2 ein und an dessen entgegengesetzten Ende durch einen kleinen Querschnitt aus dem Einlegekörper 11 aus und in den Verteilerkanal 2 ein, der an dieser Stelle einen großen durchströmbaren Querschnitt aufweist. Der Verteilerkanal 2 verteilt das Reaktionsmedium 6 dann in die Kanäle 8. Im Inneren des Einlegekörpers 11 können zusätzlich Verwirbelungskörper zur besseren Durchmischung von Mediengemischen vorgesehen sein.

Dabei kann der Einlegekörper 11 wie in Fig. 5a rotationssymmetrisch ausgebildet oder wie in Fig. 5b asymmetrisch ausgebildet sein. Das Profil des Endes des lanzenförmigen Einlegekörpers 11 mit veränderlichem Querschnitt kann an die gewünschten Druckverhältnisse im Reaktor angepaßt werden.

Die Anordnung kann ebenso in weiteren Sammel- und/oder Verteilerkanälen des Reaktors 5 vorgesehen sein.

In Fig. 6 ist die ganze Lanze, welche den Einlegekörper 11 bildet, schematisch dargestellt. Die Lanze ragt durch den Sammelkanal 3 einer Stufe n des Reaktors 5 in den Verteilerkanal 2 der Stufe n+1 hinein. Von außen wird unabhängig von aus dem Sammelkanal 3 der Stufe n stammenden Reaktionsmedien ein zusätzliches Reaktionsmedium 6 in die Stufe n+1 eingeführt. Damit werden die Reaktionsbedingungen in dem mehrstufigen Reaktor 5 homogenisiert.

In einer besonders bevorzugten Verwendung dieser Anordnung wird Sauerstoff über die Lanze in einen mehrstufigen Plattenreaktor zudosiert, in welchem Kohlenmonoxid (CO) oxidiert wird, um z.B. insbesondere ein wasserstoffreiches Reformat von unerwünschten CO-Anteilen zu reinigen.

Es ist auch möglich, den Einlegekörper 4, 7, 10, 11 katalysatorhaltig auszubilden, insbesondere mit katalytisch aktivem Material zu beschichten und/oder zu tränken und/oder ganz aus katalytisch aktivem Material zu fertigen. Dies ist besonders einfach bei einem Gewebe, welches zudem einfach in die gewünschte Form gebracht werden kann. Es ist jedoch auch möglich, zusätzlich katalytisch aktives Material im Sammelund/oder Verteilerkanal 2, 3 oder unabhängig von einem Einlegekörper 4, 7, 10, 11 vorzusehen.

Besonders vorteilhaft ist dies bei der Verwendung von Gewebe wie Vliese oder Drahtgestrick, welches als Einlegekörper 4, 7, 10, 11 in den Verteiler- und/oder Sammelkanal 2, 3 eines Plattenreaktors 5 in einem Brennstoffzellensystem eingeführt wird. Eine etwaige katalytische Beschichtung dieses Einlegekörpers kann besonders vorteilhaft zur Verbesserung der Kaltstartreaktion der Brennstoffzellen verwendet werden.

Die Verwendung von Gewebe für poröse Einlegekörper 4, 7, 10 ist besonders günstig zur zusätzlichen Entfernung von Partikeln aus den Reaktionsmedien 6.

## Patentansprüche

1. Plattenreaktor mit mindestens zwei parallel durchströmten Kanälen (8, 9) und zumindest einem den durchströmten Kanälen (81 9) zugeordneten Verteilerkanal (2) und einem den durchströmten Kanälen (8, 9) zugeordneten Sammelkanal (3), wobei Medien (6) durch den Verteilerkanal-Eingang in den Verteilerkanal (2) einleitbar und in die durchströmten Kanälen (8, 9) zuführbar und aus den durchströmten Kanälen (8, 9) in den Sammelkanal (3) durch den Ausgang des Sammelkanals (3) abführbar sind, wobei ein Einlegekörper (4, 7, 10, 11) im Strömungsweg des Mediums (6) angeordnet ist, um die Strömungsverteilung in den Kanälen (8, 9) zu homogenisieren, und wobei der Einlegekörper (4, 7, 10, 11) entlang des Verteilerkanals (2) und/oder Sammelkanals (3) in Strömungsrichtung (S) eine veränderliche Durchlässigkeit für das Medium (6) aufweist, **dadurch gekennzeichnet, dass** der Einlegekörper (4, 7, 10, 11) katalytisch aktives Material aufweist.

2. Plattenreaktor nach Anspruch 1,
**dadurch gekennzeichnet, dass** die Durchlässigkeit des Einlegekörpers (4, 7, 10, 11) in den Bereichen des Verteiler- und oder Sammelkanals geringer ist, in denen ohne Einlegekörper (4, 7, 10, 11) ein höherer Massenstrom herrschen würde als in den Bereichen, in denen ohne Einlegekörper ein geringerer Massenstrom herrschen würde.

3. Plattenreaktor nach Anspruch 1,
**dadurch gekennzeichnet, dass** der Einlegekörper (4, 7) im Verteiler- und/oder Sammelkanal (2, 3) durch eine oder mehrere Einzellagen (4. 1, 4.2, 7.1, 7.2, 7.3, 7.4, 7.5) gebildet ist.

4. Plattenreaktor nach Anspruch 1,
**dadurch gekennzeichnet, dass** der Querschnitt des Verteilerkanals (2) in Strömungsrichtung (S) abnimmt und/oder der Querschnitt Sammelkanals (3) in Strömungsrichtung (S) zunimmt.

5. Plattenreaktor nach Anspruch 3,
**dadurch gekennzeichnet, dass** zusätzlich Einlegekörper (7, 10, 11) vorgesehen sind, um den Querschnitt von Verteiler- und/oder Sammelkanal (2, 3) zu verändern.

6. Plattenreaktor nach Anspruch 4,
**dadurch gekennzeichnet, dass** der Einlegekörper (7) aus für Medien (6) partiell durchlässigem Material gebildet ist.

7. Plattenreaktor nach zumindest einem der vorangehenden Ansprüche,
**dadurch gekennzeichnet, dass** der Einlegekörper (4, 7, 10) entlang der Strömungsrichtung (S) eine veränderliche Dichte aufweist.

8. Plattenreaktor nach zumindest einem der vorangehenden Ansprüche,
**dadurch gekennzeichnet, dass** der Einlegekörper (4, 7, 10) entlang der Strömungsrichtung (S) eine veränderliche Dicke aufweist.

9. Plattenreaktor nach zumindest einem der vorangehenden Ansprüche,
**dadurch gekennzeichnet, dass** der Einlegekörper (4, 7, 10, 11) mit katalytisch aktivem Material beschichtet oder getränkt ist oder ganz aus katalytisch aktivem Material besteht.

10. Plattenreaktor nach zumindest einem der vorangehenden Ansprüche,
**dadurch gekennzeichnet, dass** der Einlegekörper (11) Öffnungen zur Zufuhr oder Abfuhr von Reaktionsmedien (6) aufweist, durch die zusätzlich Reaktionsmedien (6) in den Sammel- und/oder Abführkanal (2, 3) zuführbar sind.

11. Plattenreaktor nach zumindest einem der vorangehenden Ansprüche,
**dadurch gekennzeichnet, dass** der Einlegekörper (11) als Lanze zum Zudosieren von Reaktionsmedien (6) in mindestens eine Stufe eines mehrstufigen Reaktors (5) vorgesehen ist.

## Claims

1. Plate-type reactor, with at least two parallel throughflow ducts (8, 9) having at least one distributor duct (2) assigned to the throughflow ducts (8, 9), and with a collecting duct (3) assigned to the throughflow ducts (8, 9), media (6) being capable of being introduced into the distributor duct (2) through the distributor-duct inlet and of being fed into the throughflow ducts (8, 9) and of being discharged out of the throughflow ducts (8, 9) into the collecting duct (3) through the outlet of the collecting duct (3), an insert body (4, 7, 10, 11) being arranged in the flow path of the medium (6), in order to homogenize the flow distribution in the ducts (8, 9), and the insert body (4, 7, 10, 11) having a variable permeability for the medium (6) along the distributor duct (2) and/or collecting duct (3) in the flow direction (S), **characterized in that** the insert body (4, 7, 10, 11) has catalytically active material.

2. Plate-type reactor according to Claim 1, **characterized in that** the permeability of the insert body (4, 7, 10, 11) is lower in the regions of the distributor and/or collecting duct in which a higher mass flow would prevail without an insert body (4, 7, 10, 11) than in the regions in which a lower mass flow would prevail without an insert body.

3. Plate-type reactor according to Claim 1, **characterized in that** the insert body (4, 7) in the distributor and/or collecting duct (2, 3) is formed by one or more individual layers (4.1, 4.2, 7.1, 7.2, 7.3, 7.4, 7.5).

4. Plate-type reactor according to Claim 1, **characterized in that** the cross section of the distributor duct (2) decreases in the flow direction (S) and/or the cross section of the collecting duct (3) increases in the flow direction (S).

5. Plate-type reactor according to Claim 3, **characterized in that** insert bodies (7, 10, 11) are additionally provided in order to vary the cross section of the distributor and/or collecting duct (2, 3).

6. Plate-type reactor according to Claim 4, **characterized in that** the insert body (7) is formed from material which is partially permeable to media (6).

7. Plate-type reactor according to at least one of the preceding claims, **characterized in that** the insert body (4, 7, 10) has a variable density along the flow direction (S).

8. Plate-type reactor according to at least one of the preceding claims, **characterized in that** the insert body (4, 7, 10) has a variable thickness along the flow direction (S).

9. Plate-type reactor according to at least one of the preceding claims, **characterized in that** the insert body (4, 7, 10, 11) is coated or impregnated with catalytically active material or consists entirely of catalytically active material.

10. Plate-type reactor according to at least one of the preceding claims, **characterized in that** the insert body (11) has orifices for a feed or discharge of reaction media (6), through which orifices reaction media (6) can additionally be fed into the collecting and/or discharge duct (2, 3).

11. Plate-type reactor according to at least one of the preceding claims, **characterized in that** the insert body (11) is provided as a lance for the metering reaction media (6) into at least one stage of a multistage reactor (5).

## Revendications

1. Réacteur à plaques comprenant au moins deux canaux (8, 9) traversés parallèlement par des fluides et au moins un canal de distribution (2) associé aux canaux (8, 9) traversés par des fluides et un canal collecteur (3) associé aux canaux (8, 9) traversés par des fluides, des fluides (6) pouvant pénétrer par l'entrée du canal de distribution dans le canal de distribution (2) et être amenés aux canaux (8, 9) traversés par des fluides et être évacués des canaux (8, 9) traversés par des fluides par la sortie du canal collecteur (3) après avoir traversé ledit canal collecteur (3), un insert (4, 7, 10, 11) étant disposé dans le chemin d'écoulement du fluide (6) pour homogénéiser la répartition des fluides à l'intérieur des canaux (8, 9), et l'insert (4, 7, 10, 11) présentant dans le sens d'écoulement (S), le long du canal de distribution (2) et/ou du canal collecteur (3), une perméabilité variable pour le fluide (6), **caractérisé en ce que** l'insert (4, 7, 10, 11) présente un matériau catalytiquement actif.

2. Réacteur à plaques selon la revendication 1,
**caractérisé en ce que** la perméabilité de l'insert (4, 7, 10, 11) est plus faible dans les zones occupées par le canal de distribution et/ou par le canal collecteur, dans lesquelles il régnerait sans insert (4, 7, 10, 11) un flux massique plus important que dans les zones dans lesquelles il régnerait sans insert un flux massique plus faible.

3. Réacteur à plaques selon la revendication 1,
**caractérisé en ce que** l'insert (4, 7) disposé dans le canal de distribution et/ou le canal collecteur (2, 3) est constitué d'une ou de plusieurs couches distinctes (4.1, 4.2, 7.1, 7.2, 7.3, 7.4, 7.5).

4. Réacteur à plaques selon la revendication 1,
**caractérisé en ce que** la section du canal de distribution (2) va en diminuant dans le sens d'écoulement (S) et/ou la section du canal collecteur (3) va en augmentant dans le sens d'écoulement (S).

5. Réacteur à plaques selon la revendication 3,
**caractérisé en ce que** des inserts (7, 10, 11) supplémentaires sont prévus pour modifier la section du canal de distribution et/ou du canal collecteur (2, 3).

6. Réacteur à plaques selon la revendication 4,
**caractérisé en ce que** l'insert (7) est constitué d'un matériau partiellement perméable aux fluides (6).

7. Réacteur à plaques selon au moins une des revendications précitées, **caractérisé en ce que** l'insert (4, 7, 10) présente une densité variable le long du sens d'écoulement (S).

8. Réacteur à plaques selon au moins une des revendications précitées, **caractérisé en ce que** l'insert (4, 7, 10) présente une épaisseur variable le long du sens d'écoulement (S).

9. Réacteur à plaques selon au moins une des revendications précitées, **caractérisé en ce que** l'insert (4, 7, 10, 11) est recouvert d'une couche de matériau catalytiquement actif ou imprégné d'un matériau catalytiquement actif ou est composé entièrement d'un matériau catalytiquement actif.

10. Réacteur à plaques selon au moins une des revendications précitées, **caractérisé en ce que** l'insert (11) présente des ouvertures pour l'amenée ou l'évacuation de fluides de réaction (6), par lesquelles des fluides de réaction (6) supplémentaires peuvent être amenés dans le canal collecteur et/ou le canal évacuateur (2, 3).

11. Réacteur à plaques selon au moins une des revendications précitées, **caractérisé en ce que** l'insert (11) est prévu sous forme de lance pour le dosage de fluides de réaction (6) dans au moins un étage d'un réacteur (5) à plusieurs étages.
